# DEMANDE DE BREVET EUROPEEN

(11) **EP 4 850 982 A1**
(43) Date de publication de la demande: **09.12.2026**
(21) Numéro de dépôt: 25305812.7
(22) Date de dépôt: 04.06.2025
(51) Int. Cl.: B60Q 3/78, F21S 4/28, F21V 7/00, F21V 5/04, F21V 13/04, F21Y 103/10

(54) **MODULE D'ÉCLAIRAGE À LED AVEC PROFILÉ EXTRUDÉ ET LENTILLE CYLINDRIQUEÉ**

(71) Demandeur: ALSTOM Holdings, 93400 Saint-Ouen-sur-Seine (FR); Vignal Sesaly, 69960 Corbas (FR)
(72) Inventeur: GRILLET, Augustin, 59163 Condé-sur-L'Escaut (FR); SCHOTT, Vivien, 38780 Pont-Evêque (FR); REFNOU, Ludovic, 69390 Vourles (FR); BENZEKHROUFA, Moustafa, 69200 Venissieux (FR)
(74) Mandataire: Plasseraud IP

(57) **Abrégé**

Le dispositif lumineux comprend un profilé possédant une paroi avant (6) permettant le passage de la lumière et deux paroi latérales (22) opaques s'étendant vers l'arrière à partir de la paroi avant (6), la paroi avant (6) possédant une surface avant (10) et une surface arrière (12), et des sources de lumière (8) disposées à l'intérieur du profilé (4), derrière la paroi avant (6) et entre les deux parois latérales (22). Chaque source de lumière (8) présente une surface d'émission de lumière (8A), la lumière émise par les sources de lumières (8) frappant la surface arrière (12) et ressortant par la surface avant (10) de la paroi avant (6). La distance entre la surface émettrice de lumière (8A) de chaque source de lumière (8) et la surface avant (10) de la paroi avant (6) est comprise entre 9 mm et 15 mm et l'épaisseur de la paroi avant (6) prise en tout point de la surface arrière (12) est comprise entre 4 et 8 mm.

## Description

La divulgation concerne le domaine des dispositifs lumineux, par exemple pour l'éclairage d'un espace recevant des personnes, en particulier pour l'éclairage d'un compartiment passager d'un véhicule de transport de passagers.

Il est possible de prévoir un dispositif lumineux comprenant un profilé creux à l'intérieur duquel est disposée une bande lumineuse portant une pluralité de sources de lumière, telles que des diodes électroluminescentes, qui sont alors réparties le long du profilé. Un tel dispositif lumineux est divulgué par exemple dans EP3604912A1.

Dans certaines applications, comme par exemple pour l'utilisation d'un tel dispositif lumineux comme élément d'éclairage ou élément signalétique lumineux dans un véhicule de transport de passagers, il est souhaitable que le dispositif lumineux possède une bonne efficacité optique.

Un des objectifs de la divulgation est de disposer d'un dispositif lumineux qui possède une bonne efficacité optique et qui se présente sous une forme adaptée à la diffusion de lumière en environnement contraint.

À cet effet, la divulgation propose un dispositif lumineux comprenant un profilé s'étendant suivant une ligne longitudinale, le profilé possédant une paroi avant permettant le passage de la lumière et deux paroi latérales opaques s'étendant vers l'arrière à partir de la paroi avant, la paroi avant possédant une surface avant et une surface arrière, et des sources de lumière disposées à l'intérieur du profilé, derrière la paroi avant et entre les deux parois latérales, en étant réparties le long du profilé pour l'émission de lumière à travers la paroi avant suivant une direction principale d'éclairage dirigée de l'arrière vers l'avant, chaque source de lumière présentant une surface d'émission de lumière, la lumière émise par les sources de lumières frappant la surface arrière et ressortant par la surface avant de la paroi avant, dans lequel la distance entre la surface émettrice de lumière de chaque source de lumière et la surface avant de la paroi avant est comprise entre 9 mm et 15 mm et l'épaisseur de la paroi avant prise en tout point de la surface arrière est comprise entre 4 mm et 8 mm.

Ceci permet une homogénéisation de la lumière visible au travers de la paroi avant du profilé, bien que cette lumière soit émise par plusieurs sources de lumière. L'homogénéisation de la lumière permet d'améliorer l'éclairage fourni par le dispositif lumineux, notamment en procurant une lumière uniforme sur la surface avant de la portion avant du profilé, en particulier sans point lumineux, notamment au droit des sources de lumière.

Ceci permet de donner l'impression visuelle que la lumière est émise sur toute la surface avant de la portion avant du profilé, même si la lumière est émise à partir de sources de lumière ponctuelles espacées les unes des autres le long du profilé.

Bien qu'à titre principal les distances et épaisseurs mentionnées précédemment offrent des résultats probant, II est à noter que l'épaisseur de la paroi avant prise en tout point de la surface arrière peut être modulée en fonction des propriétés du matériau de la paroi avant et que cette épaisseur pourrait dans certaines situations être inférieure à 4mm ou supérieure à 8mm, sans s'éloigner de la portée de la présente divulgation. De même, en fonction de la source lumineuse sélectionnée, la distance entre la surface émettrice de lumière de chaque source de lumière et la surface avant de la paroi avant pourrait varier au-delà de la plage de distance sélectionnée. Ces modulations peuvent intervenir pour parvenir à limiter l'effet de spotting.

Selon des modes de réalisation particulier, le dispositif lumineux comprend une ou plusieurs des caractéristiques optionnelles suivantes, prises individuellement ou selon toutes les combinaisons techniquement possibles :
- Le ratio de l'épaisseur de la paroi avant en tout point de la surface arrière sur la distance entre la surface émettrice de lumière de chaque source de lumière et la surface avant de la paroi avant est égal ou supérieur à 0,1 et/ou égal ou inférieur à 0,5 ;
   Ainsi, ce ratio optimise l'homogénéité de la lumière émise, réduisant les effets de "spotting" tout en maintenant une efficacité lumineuse élevée.
- Le profil transversal de la surface arrière est une courbe continue, présentant de préférence une dérivée continue ;
   En effet, cette courbe continue sans rupture de pente permet une répartition uniforme de la lumière, améliorant l'homogénéité de l'éclairage.
- Le profil transversal de la surface arrière possède une portion concave et au moins une portion convexe reliée à la portion concave par un point d'inflexion ;
   Ainsi, cette configuration géométrique favorise une diffusion équilibrée de la lumière, minimisant les zones d'ombre ou de surbrillance.
- Le profil transversal de la surface arrière possède une portion concave et deux portions convexes situées latéralement de part et d'autre de la portion concave, chaque portion convexe étant reliée à la portion concave par un point d'inflexion ;
   Ainsi, cette structure améliore la répartition transversale de la lumière, garantissant une luminosité uniforme sur toute la largeur de la paroi avant.
- La paroi avant présente une épaisseur variable transversalement, le profil de la surface arrière présentant un point d'épaisseur minimale situé dans la portion concave et/ou un point d'épaisseur maximale situé dans une portion convexe ou dans chaque portion convexe, l'épaisseur étant de préférence croissante en se déplaçant transversalement du point d'épaisseur minimale vers chaque point d'épaisseur maximale ;
   Ainsi, la variation d'épaisseur permet d'ajuster la diffusion lumineuse en fonction des besoins, améliorant l'uniformité de l'éclairage tout en réduisant les pertes lumineuses.
- Le profil transversal de la surface arrière est symétrique par rapport à un axe médian et/ou le profil de la surface avant est symétrique par rapport à un axe médian ; Ainsi, cette symétrie garantit une répartition lumineuse équilibrée de part et d'autre de l'axe médian, évitant les asymétries dans l'éclairage.
- La surface avant est sensiblement plane ou bombée vers l'avant ;
   La mise en œuvre d'une surface plane ou bombée améliore la diffusion de la lumière, offrant un éclairage uniforme et plus esthétique.
- Chaque paroi latérale possède une surface interne inclinée de manière à être tournée vers l'autre paroi latérale et vers l'avant ;
   Ainsi, cette inclinaison des parois latérales favorise la réflexion de la lumière vers l'avant, augmentant l'efficacité lumineuse.
- Chaque surface interne définit avec la direction d'éclairage principale un angle compris entre 20° et 40° ;
   Ainsi, cet angle optimise la réflexion de la lumière, réduisant les pertes lumineuses et améliorant l'intensité lumineuse perçue.
- La paroi avant est formée dans un premier matériau et chaque paroi latérale est formée dans un deuxième matériau, le deuxième matériau étant différent du premier matériau ;
   En effet, l'utilisation de matériaux distincts permet d'optimiser les propriétés optiques et mécaniques, comme la transmission lumineuse pour la paroi avant et la réflexion pour les parois latérales.
- Le premier matériau possède un taux de transmission de lumière compris entre 30% et 60% et/ou un indice de diffusion égal ou supérieur à 80% et/ou un indice de réfraction compris entre 1.3 et 1.6 ;
   Ces propriétés du matériau garantissent une diffusion homogène de la lumière tout en limitant les pertes lumineuses.
- Le deuxième matériau présente un coefficient de réflexion égal ou supérieur à 85%, de préférence égal ou supérieur à 89% ;
   Ce coefficient de réflexion élevé maximise la redirection de la lumière vers l'avant, augmentant l'efficacité lumineuse globale.
- La distance entre chaque source de lumière et la surface arrière, le cône de diffusion de chaque source de lumière et la largeur de la surface arrière sont tels que le taux de lumière émise par chaque source de lumière frappant directement la surface arrière est d'au moins 80%, de préférence au moins 90% ;
   Cette configuration maximise l'utilisation de la lumière émise par les sources, réduisant les pertes et améliorant l'efficacité lumineuse.
- Le dispositif lumineux comprend un soufflet prévu pour s'étendre entre deux voitures, le soufflet comprenant un bourrelet et un dispositif lumineux selon l'une quelconque des revendications précédentes intégré dans le bourrelet.
   Ainsi, l'intégration dans un soufflet entre deux voitures permet d'assurer un éclairage fonctionnel et esthétique dans des espaces contraints, tout en augmentant la sécurité et le confort des passagers.

La divulgation et ses apports seront mieux compris à la lecture de la description qui va suivre, donnée uniquement à titre d'exemple non limitatif, et faite en référence aux dessins annexés, sur lesquels :
- la Figure 1 est une vue de dessus d'un dispositif lumineux selon un exemple de mise en œuvre ;
- la Figure 2 est une vue en coupe transversale du dispositif lumineux de la Figure 1, selon II-II sur la Figure 1 ;
- la Figure 3 est une vue analogue à celle de la Figure 2, illustrant un dispositif lumineux selon autre exemple de mise en œuvre.

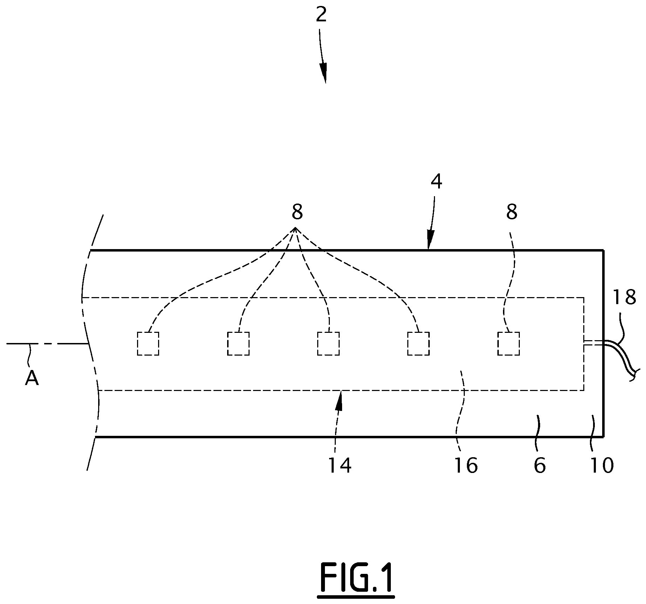

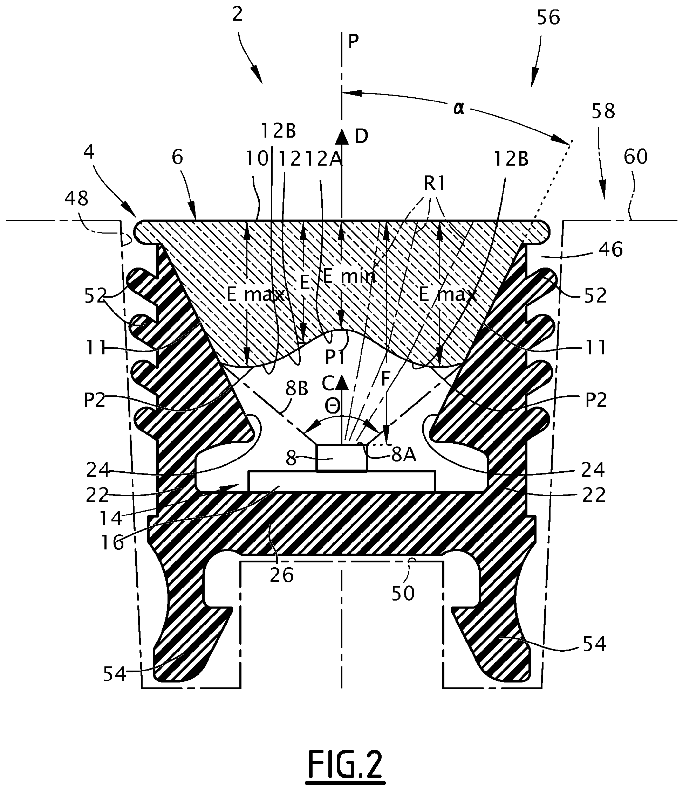

Tel qu'illustré sur les Figures 1 et 2, un dispositif lumineux 2 comprend un profilé 4 allongé suivant une ligne longitudinale A, le profilé 4 possédant une paroi avant 6 configurée pour laisser passer la lumière à travers la paroi avant 6, et une pluralité de sources de lumière 8 disposées derrière la paroi avant 6 en étant réparties le long du profilé 4, en particulier le long de la ligne longitudinale A.

La ligne longitudinale A est par exemple rectiligne. En variante, la ligne longitudinale A est curviligne ou partiellement rectiligne et partiellement curviligne.

La paroi avant 6 possède une surface avant 10 et une surface arrière 12. La surface avant 10 de la paroi avant 6 est destinée à être visible par l'utilisateur. La surface arrière 12 est opposées à la surface avant 10. La paroi avant 6 présente des surfaces latérales 11 s'étendant entre la surface avant 10 et la surface arrière 12.

Les sources de lumière 8 sont disposées derrière la paroi avant 6 de sorte que la lumière générée par les sources de lumière 8 pénètre dans la paroi avant 6 en frappant la surface arrière 12 et ressort de la paroi avant 6 par la surface avant 10.

La paroi avant 6 est réalisée dans un premier matériau laissant passer la lumière, en particulier un premier matériau opalescent, transparent ou translucide, de préférence opalescent ou translucide.

Le premier matériau de la paroi avant 6 présente de préférence un taux de transmission de lumière compris entre 30% et 60%, c'est à dire égal ou supérieur à 30% et égal ou inférieur à 60%.

Les sources de lumière 8 sont par exemple des diodes électroluminescentes (ou LED de l'anglais « Light Emitting Diode »).

Les sources de lumières 8 sont par exemple réparties le long du profilé 4, en étant par exemple espacées les unes des autres le long du profilé 4, de préférence de manière uniforme, c'est à dire avec un pas constant entre les sources de lumière 8.

Le dispositif lumineux 2 comprend par exemple une bande lumineuse 14 disposée derrière la paroi avant 6, la bande lumineuse 14 comprenant une bande de support 16 sur laquelle sont disposées les sources de lumière 8, les sources de lumières 8 étant réparties le long de la bande de support 16, en étant par exemple espacées les unes des autres le long de la bande de support 16, de préférence de manière uniforme. La bande de support 16 s'étend suivant la ligne longitudinale A.

La bande lumineuse 14 possède par exemple un câble 18 pour la transmission de signaux d'alimentation et/ou de signaux de commande des sources de lumière 8. Le câble 18 sort par exemple du profilé 4, en particulier à une extrémité du profilé 4. Le câble 18 est relié de manière connue à une unité électronique d'alimentation et/ou de commande (non représentée).

Comme illustré sur la Figure 2, le dispositif lumineux 2 est configuré pour émettre la lumière générée par les sources de lumière 8 à travers la portion avant 6, de préférence suivant une direction principale d'éclairage D dirigée de l'arrière vers l'avant.

Les sources de lumières 8 sont disposées derrières la paroi avant 6, pour l'émission de lumière suivant une direction principale d'émission C qui est de préférence parallèle à la direction principale d'éclairage D, et en particulier colinéaire à la direction principale d'éclairage D.

Chaque source de lumière 8 possède une surface émettrice de lumière 8A. La surface émettrice de lumière 8A de chaque source de lumière 8 est de préférence orientée dans la direction principale d'éclairage D, de l'arrière vers l'avant.

Chaque source de lumière 8 émet la lumière suivant un cône d'émission 8B centré sur la direction d'émission C. L'angle au sommet θ du cône d'émission 8B est par exemple égal ou supérieure à 80°, de préférence égale ou supérieure à 100°, encore de préférence égal ou supérieur à 110°, et/ou égal ou inférieur à 160, de préférence égal ou inférieur à 140°, encore de préférence égal ou inférieur à 130°. L'angle au sommet θ du cône d'émission 8B est par exemple environ égal à 120°.

Le profilé 4 est profilé suivant la ligne longitudinale A. Le profilé 4 présente un profil transversal en section transversalement à la ligne longitudinal A. Le profil du profilé 4 est sensiblement constant le long de la ligne longitudinale A.

La surface avant 10 et la surface arrière 12 de la paroi avant 6 du profilé 4 sont elles-mêmes profilées suivant la ligne longitudinale A. La surface avant 10 et la surface arrière 12 présentent chacune un profil transversal.

La surface avant 10 est par exemple sensiblement plane. Le profil transversal de la surface avant 10 est un segment rectiligne. Dans ce cas, la direction principale d'éclairage D est de préférence perpendiculaire à la surface avant 10.

En variante, la surface avant 10 est convexe ou concave. La surface avant 10 présente par exemple un profil arqué, en particulier en arc de cercle.

La surface avant 10 est par exemple lisse. En variante, la surface avant 10 présente des reliefs en creux et/ou des reliefs en saillies, comme par exemple des stries longitudinales.

Le profil transversal de la surface avant 10 est de préférence symétrique par rapport à un axe médian parallèle à la direction principale d'éclairage D.

La surface arrière 12 présente un profil transversal configuré pour homogénéiser la répartition transversale de la lumière traversant la paroi avant 6 de la surface arrière 12 vers la surface avant 10.

Le profil transversal de la surface arrière 12 est de préférence une ligne continue courbe, présentant de préférence une dérivée continue, c'est à dire dépourvue de rupture de pente.

Le profil transversal de la surface arrière 12 présente par exemple une forme générale ondulée.

Le profil transversal de la surface arrière 12 possède par exemple une portion concave P1 et au moins une portion convexe P2, chaque portion convexe P2 étant reliée à la portion concave P1 par un point d'inflexion.

Dans des exemples, le profil transversal de la surface arrière 12 possède une portion concave P1 et deux portions convexes P2 situées latéralement de part et d'autre de la portion concave P1, chaque portion convexe P2 étant reliée à la portion concave P1 par un point d'inflexion.

Chaque portion convexe P2 s'étend par exemple de la portion concave P1 jusqu'à un bord latéral de la surface arrière 12.

Lorsque le profil transversal de la surface arrière 12 possède deux portions convexes P2 de part et d'autre de la portion concave P1, le profil transversal comprend par exemple, successivement et d'un bord latéral à l'autre de la surface arrière 12, une portion convexe P2 suivie de la portion concave P1 suivie d'une portion convexe P2.

La paroi avant 6 présente une épaisseur, qui est prise entre la surface arrière 12 et la surface avant 10suivant la direction principale d'éclairage D.

L'épaisseur de la paroi avant 6 est variable transversalement.

Le profil transversal de la surface arrière 12 présente par exemple un point d'épaisseur minimale Emin, auquel l'épaisseur de la paroi avant 6 est minimale, situé dans la portion concave P1, auquel l'épaisseur de la paroi avant 6 est minimale, et/ou un point d'épaisseur maximale Emax, auquel l'épaisseur de la paroi avant 6 est maximale, situé dans une portion convexe P2 ou dans chaque portion convexe P2.

L'épaisseur est de préférence croissante en se déplaçant transversalement du point d'épaisseur minimale Emin vers chaque point d'épaisseur maximale Emax.

De préférence, l'épaisseur de la paroi avant 6 est maximale à proximité d'un ou de chaque bord latéral de la surface arrière 12. Chaque point d'épaisseur maximale Pmax est situé à proximité d'un bord latérale de la surface arrière 12.

En tout point de la surface arrière 12, l'épaisseur E de la paroi avant 6 est comprise en 4 mm et 8 mm. L'épaisseur minimale de la paroi avant 6 est égale ou supérieure à 4 mm et et/ou l'épaisseur maximale de la paroi avant 6 est égale ou inférieure à 8 mm.

En outre, la distance F entre la surface émettrice de lumière 8A de chaque source de lumière 8 et la surface avant 10 de la paroi avant 6, prise suivant la direction d'éclairage principale D et au droit de la source de lumière 8, est comprises entre 9 mm et 15 mm, c'est à dire égale ou supérieure à 9 mm et égale ou inférieure à 15 mm.

La surface arrière 12 présente une forme ondulée transversalement avec une zone concave 12A et au moins une zone convexe 12B adjacente à la zone concave 12A.

La surface arrière 12 présente en particulier une forme ondulée transversalement avec une zone concave 12A située entre deux zone convexes 12B situées de part et d'autre de la zone concave 12A.

Chaque zone convexe 12B s'étend entre la zone concave 12A et un bord latéral respectif de la surface arrière 12.

La surface arrière 12 présente successivement, d'un bord latéral à l'autre de la surface arrière 12, une zone convexe 12B suivie d'une zone concave 12A suivie d'une zone convexe 12B.

L'épaisseur de la paroi avant 6 est minimale dans la zone concave 12A et maximale dans la ou chaque zone convexe 12B, en particulier sur un ou chaque bord latéral de la surface arrière 12.

Le point d'épaisseur minimale Emin est situé de la zone concave12A, et chaque point d'épaisseur maximale Emax est situé dans une zone convexe 12B.

La tangente au profil de la surface arrière 10 au point d'épaisseur minimale Pmin est par exemple perpendiculaire à la direction principale d'éclairage D.

Lorsque la surface avant 10 est plane, la tangente au profil de la surface arrière 12 au point d'épaisseur minimale Emin est par parallèle à la surface avant 10.

La tangente au profil de la surface arrière 12 au point d'épaisseur maximale Emax est par exemple perpendiculaire à la direction principale d'éclairage D au point d'épaisseur maximale Emax.

Lorsque la surface avant 10 est plane, la tangente au profil de la surface arrière 12 au point d'épaisseur maximale Emax est par exemple parallèle à la surface avant 10.

De préférence, l'angle maximal entre la tangente au profil de la surface arrière 12 au point d'épaisseur minimale Emin et la tangente en un point du profil de la surface arrière 12 situé entre le point d'épaisseur minimal Emin et un point d'épaisseur maximale Emax, est compris entre 20° et 40°, c'est à dire égal ou supérieur à 20° et égal ou inférieure à 40°.

Lorsque la surface avant 10 est plane, l'angle maximal entre la tangente en un point quelconque du profil de la surface arrière 12 et la surface avant 10 est compris entre 5° et 40°, c'est à dire égal ou supérieur à 5° et égal ou inférieur à 40°.

Chacune de la surface avant 10 et de la surface arrière 12 est par exemple symétrique par rapport à un plan longitudinal de symétrie P, qui est par exemple un plan longitudinal médian du profilé 4.

Le profil transversal de la surface arrière 12 est par exemple symétrique par rapport à un axe médian parallèle à la direction principale d'éclairage D.

De préférence, la largeur de la surface avant 10 est comprise entre 10 mm et 100 mm, c'est à dire égal ou supérieur à 10 mm et égal ou inférieure à 100 mm, et/ou la largeur de la surface arrière 12 est comprise entre 5 mm et 80 mm, c'est à dire égale ou supérieur à 5 mm et égale ou supérieur à 80 mm.

Dans des exemples, la largeur de la surface avant 10 est strictement supérieure à la largeur de la surface arrière 12. La largeur de la paroi avant 6 est par exemple croissante de la surface arrière 12 vers la surface avant 10.

La paroi avant 6 présente par exemple un profil de forme générale trapézoïdale dont la petite base est définie par la surface arrière 12 et la grande base est définie par la surface avant 10 et les côtés sont définis par les surfaces latérales 11.

Les surfaces latérales 11 de la paroi avant 6 s'éloignent transversalement l'une de l'autre de la surface arrière 12 vers la surface avant 11.

Chaque surface latérale 11 de la paroi avant 6 est par exemple plane.

De préférence, la distance M entre la surface d'émission de lumière 8A de chaque source de lumière 8 et la surface arrière 12, l'angle au sommet du cône de diffusion de chaque source de lumière 8 et la largeur de la surface arrière 12 sont tels que le taux de lumière émise par chaque source de lumière 8 frappant directement la surface arrière 12 est d'au moins 80%, c'est à dire égal ou supérieur à 80%, de préférence au moins 90%, c'est à dire égal ou supérieur à 90%.

Par « directement », on entend que la lumière générée par la source de lumière se propage de la surface d'émission de lumière 8A à la surface arrière 12 sans réflexion entre la surface d'émission de lumière 8A et la surface arrière 12.

De préférence, le ratio de l'épaisseur de la paroi avant 6 en tout point de la surface arrière 12 sur la distance entre la surface émettrice de lumière 8A de chaque source de lumière 8 et la surface avant 10 de la paroi avant 6 est égal ou supérieur à 0,1 et/ou égal ou inférieur à 0,5. Ceci permet d'assurer une meilleure diffusion de la lumière. Ce rapport peut ou pas être lié à la distance et à l'épaisseur de la paroi avant.

Le profilé 4 possède par exemple une paroi arrière 20. La paroi arrière 20 est située en regard de la surface arrière 12 de la paroi avant 6. Les sources de lumières 8 sont par exemple disposées entre la paroi avant 6 et la paroi arrière 10, en étant par exemple montées sur la paroi arrière 20. En particulier, la bande lumineuse 14 est disposée sur la paroi arrière 20.

Le profilé 4 possède deux parois latérales 22, chaque paroi latérale 22 s'étendant vers l'arrière à partir d'un bord latéral respectif de la paroi avant 6.

Chaque paroi latérale 22 possède une surface interne 24 inclinée de manière à être tournée l'autre paroi latérale 22 et vers l'avant. Les surface interne 24 sont en regard l'une de l'autre et inclinées de manière qu'elle s'écarte progressivement l'une de l'autre de l'arrière vers l'avant.

Chaque surface interne 24 inclinée est par exemple inclinée de manière à définir avec la direction principale d'éclairage D, dirigée de l'arrière vers l'avant, un angle α compris entre 20° et 40°, c'est à dire égal ou supérieur à 20° et égal ou inférieur à 40°.

Chaque surface interne 24 est par exemple sensiblement plane.

Chaque surface interne 24 est par exemple en contact avec une surface latérale 11 respective de la paroi avant 6.

Le profilé 4 comprend par exemple la paroi avant 6 et la paroi arrière 20 reliées entre elles par les deux parois latérales 22, chaque paroi latérale 22 s'étendant entre la paroi avant 6 et la paroi arrière 22.

Le profilé 4 est par exemple creux et définit une cavité interne 26, délimitée par la paroi avant 6, éventuellement, la paroi arrière 20 et/ou une ou deux parois latérale 22. La cavité interne 26 est en particulier délimitée entre la paroi avant 6 et la paroi arrière 20 et entre les deux paroi latérales 22.

La paroi avant 6 est formée dans le premier matériau, et chaque paroi latérale 22, et optionnellement la paroi arrière 20 est formée dans un deuxième matériau, le deuxième matériau étant différent du premier matériau.

Le premier matériau présente un taux de transmission de lumière strictement supérieur à celui du deuxième matériau.

Ceci permet de favoriser la sortie de la lumière générée par les sources de lumière 8 via la paroi avant 6, tout en limitant la dispersion de la lumière générée par les sources de lumière 8.

Le premier matériau et le deuxième matériau sont réalisés par exemple dans une même matière de base, par exemple une matière élastomère, le premier matériau présentant une couleur différente de celle du deuxième matériau.

Dans un exemple de mise en œuvre, le premier matériau est transparent, translucide et/ou opalescent et/ou le deuxième matériau est opaque.

Dans un exemple de mise en œuvre, le premier matériau est de couleur blanche et le deuxième matériau est par exemple de couleur blanche, de couleur noir ou de couleur grise.

Dans des exemples, le deuxième matériau présente un coefficient de réflexion égal ou supérieur à 85%, de préférence égal ou supérieur à 89%.

Le profilé 4 est réalisé par exemple par extrusion.

En particulier, le profilé 4 possédant la paroi avant 6 réalisée dans un premier matériau, et les parois latérales 22 et optionnellement une paroi arrière 26 réalisées dans un deuxième matériau, le profilé 4 est réalisé par exemple par coextrusion.

Ceci est facilité si le premier matériau et le deuxième matériau sont réalisés dans la même matière de base mais avec des couleurs différentes.

Le premier matériau présente par exemple un indice de réfraction compris entre 1.3 et 1.6, c'est à dire égal ou supérieur à 1,3 et égal ou inférieur à 1,6.

L'indice de réfraction est par exemple mesuré selon ce standard ISO 489:2022.

Le premier matériau présente par exemple un indice de diffusion (ou « haze » selon la terminologie anglaise) égal ou supérieur à 80%.

L'indice de diffusion correspond au pourcentage de lumière qui dévie du rayon incident de plus de 2,5°. L'indice de diffusion est par exemple mesuré selon le standard ASTM D1003.

De préférence, de l'air est présent entre les sources de lumières 8 et la surface arrière 12 de la paroi avant 6.

L'indice de réfraction de l'air est considéré égal à 1.

Comme illustré sur la Figure 2, le profil é 4 est par exemple configuré pour être inséré dans une gorge 46 possédant des surfaces latérales 48 et un fond 50.

Le profilé 4 est par exemple configuré pour être inséré en force dans la gorge 46 en y étant retenu par friction et/ou par complémentarité de forme.

Pour ce faire, le profilé 4 est par exemple muni de reliefs de retenue en saillie sur des faces externes du profilé 4, configuré pour retenir le profil 4 inséré dans la gorge 46.

Des reliefs de retenue comprennent par exemple des lèvres latérales 52, prévues pour venir en contact avec les surface latérales 48, et/ou de crochets 54, prévus pour s'engager dans des espaces de réception correspondants prévus dans le fond 50.

Avantageusement, lorsque les sources de lumière 8 font partie d'une bande lumineuse 14, il est possible de prévoir plusieurs bandes lumineuses 14 disposées à la suite le long du profilé et/ou de prévoir qu'une ou chaque bande lumineuse 14 est sécable, par exemple à intervalle régulier.

Ceci permet d'adapter la longueur du dispositif lumineux 2, et coupant le profilé 4 et la bande lumineuse 14.

Dans un exemple de mise en œuvre, le dispositif lumineux 2 possède plusieurs bandes lumineuses 14, ayant chacune une longueur pouvant aller jusqu'à 1.000 mm et/ou une ou chaque bande lumineuse 14 est sécable, par exemple à intervalles réguliers, avec un pas de section compris par exemple entre 40 mm et 60 mm, c'est à dire égal ou supérieur à 40 mm et égal ou inférieur à 60 mm.

Le profilé 4 est de préférence flexible.

Ceci permet de conférer au profilé 4 une forme souhaitée pour son installation, par exemple en disposant le profilé selon une ligne longitudinale A au moins en partie curviligne.

Le profilé 4 est de préférence réalisé à partir d'une ou plusieurs matières permettant d'obtenir un profilé 4 flexible, en particulier un plusieurs matières élastomères.

En particulier, lorsque le profilé 4 est réalisé dans un premier matériau et un deuxième matériau, ceux-ci sont par exemple réalisés à partir d'une matière de base élastomère

Le dispositif lumineux 2 est utilisable dans diverses applications, et en particulier pour l'éclairage et/ou la signalétique dans les véhicules de transport de passager, en particulier les véhicules ferroviaires (train, tramway, tram-train, métro...), les véhicules routiers (bus, cas...) ou les véhicules aériens (avion, hélicoptère...)

Le dispositif lumineux 2 est utilisable dans un véhicule ferroviaire, et en particulier dans un ensemble d'intercirculation entre deux voitures adjacentes d'un véhicule ferroviaire.

Dans un exemple de mise en œuvre, comme illustré sur la Figure 2, un ensemble d'intercirculation 56 entre deux voitures adjacentes d'un véhicule ferroviaire comprend un soufflet 58 configuré pour relier les deux voitures, le soufflet 58 comprenant au moins un bourrelet 60, la gorge 46 étant disposées le long du bourrelet 60.

En fonctionnement, les sources de lumière 8 émettent de la lumière qui frappe principalement la surface arrière 12 de la paroi avant 6 et traverse la paroi avant 6 pour ressortir par la surface avant 10.

La combinaison de la plage de distance entre la surface avant 10 et la surface d'émission de lumière 8A de chaque source de lumière 8 (entre 9 mm et 15 mm) et de la plage d'épaisseur de la paroi avant (entre 4 mm et 8 mm en tout point de la surface arrière 12) permet de disposer d'un éclairage efficace tout en générant une lumière diffuse un limitant un effet de « spotting », c'est à dire en limitant la possibilité de localiser chaque source de lumière individuellement à travers la paroi avant 6, tout en limitant l'encombrement du dispositif lumineux suivant la direction principale d'éclairage D. L'éclairage semble ainsi homogène sur la largeur et la longueur de la surface avant 10. Le taux de transmission du premier matériau constituant la paroi avant 6 contribue à la limitation de l'effet de « spotting ».

Les paroi latérales 22 formées dans un deuxième matériau et possédant des surfaces internes 24 en contact avec des surfaces latérales 11 de la paroi avant 6, en particulier des surfaces internes 24 divergeant l'une de l'autre de l'arrière vers l'avant, favorise la sortie de la lumière vers l'avant par réflexion sur ces surfaces internes 24. Ceci contribue aussi à l'homogénéisation de la lumière sortant par la surface avant 10 de la paroi avant 6.

Le positionnement des sources de lumières 8 à une distance appropriée derrière la surface arrière 12 de la paroi avant 6 en fonction de l'angle au sommet du cône d'émission de lumière permet de maximiser le taux de lumière générée par les sources de lumière 8 et frappant directement la surface arrière 12. Ceci contribue aussi l'homogénéisation de la lumière sortant par la surface avant 10.

Le profil transversal de la surface arrière 12 peut aussi contribuer à homogénéiser la lumière sortant par la surface avant 10 de la paroi avant 6.

En effet, les sources de lumière 8 émettent des rayons lumineux comme illustré par les flèches R1 en traits mixtes sur la Figure 2. Chaque rayon lumineux R1 atteignant la surface arrière 12 pénètre dans la paroi avant 6 en étant dévié par réfraction du fait du changement de milieu entre l'air présente derrière la paroi avant 6 et le premier matériau de la paroi avant 6.

L'angle de déviation dépend de l'angle d'incidence du rayon lumineux R1 sur la surface arrière 12, et donc du profil de la surface arrière 12.

Le profil de la surface arrière 12 permet que les rayons lumineux R1 provenant des sources de lumières 8 et frappant la surface arrière 12 soient répartis transversalement de manière homogène pour assurer un éclairage transversalement homogène sur la surface avant 10 par laquelle la lumière sort de la paroi avant 6.

En particulier, la forme ondulée transversalement de la surface arrière 12 pour former une zone concave 12A et une ou deux zones convexes 12B adjacentes à la zone concave 12A, en particulier une zone concave 12A située entre deux zones convexes 12B permet une bonne répartition transversale.

Les caractéristiques géométriques de la paroi avant 6 et du profil de la surface arrière 12, en particulier la variation de l'épaisseur, les gammes d'épaisseur, la variation de courbure (convexe / concave), les gammes de la pente de la tangente au profil, la variation de largeur de la paroi avant entre la surface arrière 12 et la surface avant 10 et les gammes de largeur, individuellement et en combinaisons, permettent une répartition transversale homogène de la lumière sortant par la surface avant 10.

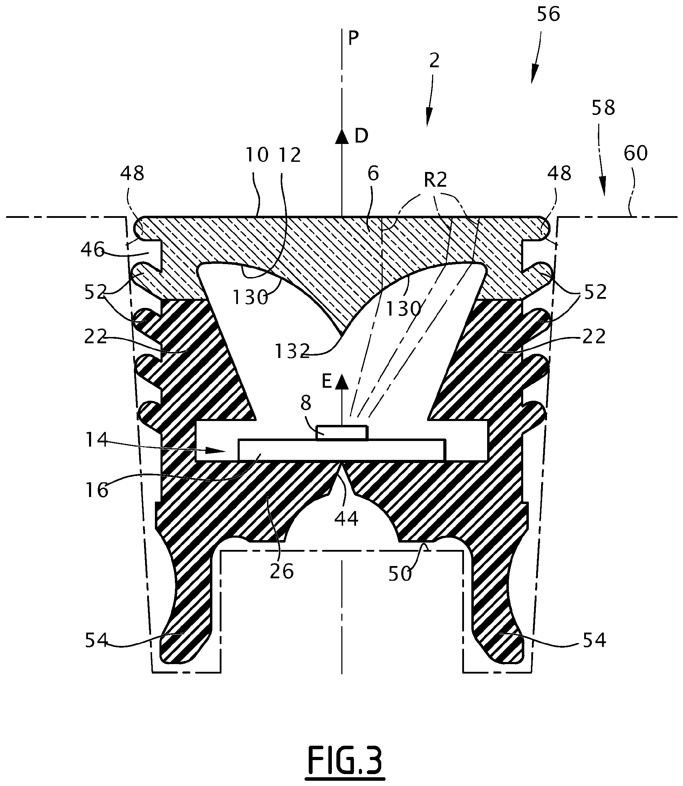

Sur la Figure 3, sur laquelle les références numériques aux éléments similaires sont reprise, un dispositif lumineux 2 diffère de celui des Figures 1 et 2 en ce que la surface arrière 12 présente deux flanc latéraux 130 de part et d'autre d'une arête centrale 132, chaque flanc latéral 130 étant convexe et s'étendant de l'arête centrale 132 à un bord latéral de la surface arrière 12, les deux flancs latéraux 130 étant symétriques de part et d'autre d'un plan passant par l'arrête centrale 132, en particulier un plan longitudinal médian P.

En fonctionnement, les sources de lumière 8 émettent des rayons lumineux, comme illustré par les flèches R2 en traits mixtes sur la Figure 3, avec une répartition transversale de la lumière sortant par la surface avant 10 moins homogène qu'avec le dispositif lumineux 2 de la Figure 2.

L'étendue de la protection apportée par divulgation n'est pas limitée aux exemples et aux variantes décrits ci-dessus et illustrés sur les Figures, d'autres variantes et d'autres exemples étant envisageable.

Comme illustré sur les Figures 1 et 2, le dispositif lumineux 2 comprend par exemple une seule rangée de sources de lumières 8 réparties le long de la ligne longitudinale A.

En variante, le dispositif lumineux 2 comprend par exemple plusieurs rangées de sources de lumières 8, les sources de lumière 8 de chaque rangée de sources lumineuses 8 étant réparties le long de la ligne longitudinale A, les rangées de sources lumineuses 8 étant parallèles entre elles. En particulier, le dispositif lumineux 2 comprend par exemple deux rangées de sources lumineuses 8, trois rangées de sources lumineuses 8 ou plus de trois rangées de sources lumineuses 8.

## Revendications

1. Dispositif lumineux comprenant un profilé (4) s'étendant suivant une ligne longitudinale (A), le profilé (4) possédant une paroi avant (6) permettant le passage de la lumière et deux paroi latérales (22) opaques s'étendant vers l'arrière à partir de la paroi avant (6), la paroi avant (6) possédant une surface avant (10) et une surface arrière (12), et des sources de lumière (8) disposées à l'intérieur du profilé (4), derrière la paroi avant (6) et entre les deux parois latérales (22), en étant réparties le long du profilé (4) pour l'émission de lumière à travers la paroi avant (6) suivant une direction principale d'éclairage (D) dirigée de l'arrière vers l'avant, chaque source de lumière (8) présentant une surface d'émission de lumière (8A), la lumière émise par les sources de lumières (8) frappant la surface arrière (12) et ressortant par la surface avant (10) de la paroi avant (6), dans lequel la distance entre la surface émettrice de lumière (8A) de chaque source de lumière (8) et la surface avant (10) de la paroi avant (6) est comprise entre 9 mm et 15 mm et l'épaisseur de la paroi avant (6) prise en tout point de la surface arrière (12) est comprise entre 4 et 8 mm.

2. Dispositif lumineux selon la revendication 1, dans lequel le ratio de l'épaisseur de la paroi avant (6) en tout point de la surface arrière (12) sur la distance entre la surface émettrice de lumière (8A) de chaque source de lumière (8) et la surface avant (10) de la paroi avant (6) est égal ou supérieur à 0,1 et/ou égal ou inférieur à 0,5.

3. Dispositif lumineux selon la revendication 1 ou la revendication 2, dans lequel le profil transversal de la surface arrière (12) est une courbe continue, présentant de préférence une dérivée continue.

4. Dispositif lumineux selon la revendication 3, dans lequel le profil transversal de la surface arrière (12) possède une portion concave (P1) et au moins une portion convexe (P2) reliée à la portion concave par un point d'inflexion.

5. Dispositif lumineux selon l'une quelconque des revendications précédentes, dans lequel le profil transversal de la surface arrière (12) possède une portion concave (P1) et deux portions convexes (P2) situées latéralement de part et d'autre de la portion concave (P1), chaque portion convexe (P2) étant reliée à la portion concave par un point d'inflexion.

6. Dispositif lumineux selon la revendication 3 ou la revendication 4, dans lequel la paroi avant (6) présente une épaisseur variable transversalement, le profil de la surface arrière (12) présentant un point d'épaisseur minimale (Emin) situé dans la portion concave (P1) et/ou un point d'épaisseur maximale (Emax) situé dans une portion convexe (P2) ou dans chaque portion convexe (P2), l'épaisseur étant de préférence croissante en se déplaçant transversalement du point d'épaisseur minimale (Emin) vers chaque point d'épaisseur maximale (Emax).

7. Dispositif lumineux selon l'une quelconque des revendications précédentes, dans lequel le profil transversal de la surface arrière (12) est symétrique par rapport à un axe médian et/ou le profil de la surface avant (10) est symétrique par rapport à un axe médian.

8. Dispositif lumineux selon l'une quelconque des revendications précédentes, dans lequel la surface avant (10) est sensiblement plane ou bombée vers l'avant.

9. Dispositif lumineux selon l'une quelconque des revendications précédentes, dans lequel chaque paroi latérale (22) possède une surface interne (24) inclinée de manière à être tournée vers l'autre paroi latérale (22) et vers l'avant.

10. Dispositif lumineux selon la revendication 9, dans lequel chaque surface interne (24) définit avec la direction d'éclairage principale (D) un angle (α) compris entre 20° et 40°.

11. Dispositif lumineux selon l'une quelconque des revendications précédentes, dans lequel la paroi avant (6) est formée dans un premier matériau et chaque paroi latérale (22) est formée dans un deuxième matériau, le deuxième matériau étant différent du premier matériau.

12. Dispositif lumineux selon l'une quelconque des revendications précédentes, dans lequel le premier matériau possède un taux de transmission de lumière compris entre 30% et 60% et/ou un indice de diffusion égal ou supérieur à 80% et/ou un indice de réfraction compris entre 1.3 et 1.6.

13. Dispositif lumineux selon l'une quelconque des revendications, dans lequel le deuxième matériau présente un coefficient de réflexion égal ou supérieur à 85%, de préférence égal ou supérieur à 89%.

14. Dispositif lumineux selon l'une quelconque des revendications précédentes, dans lequel la distance entre chaque source de lumière (8) et la surface arrière (12), le cône de diffusion de chaque source de lumière (8) et la largeur de la surface arrière (12) sont tels que le taux de lumière émise par chaque source de lumière (8) frappant directement la surface arrière (12) est d'au moins 80%, de préférence au moins 90%.

15. Dispositif d'intercirculation de véhicule ferroviaire, comprenant un soufflet (58) prévu pour s'étendre entre deux voitures, le soufflet (58) comprenant un bourrelet (60) et un dispositif lumineux selon l'une quelconque des revendications précédentes intégré dans le bourrelet (60).
